# EUROPEAN PATENT APPLICATION

(11) **EP 1 211 647 A1**
(43) Date of publication of application: **05.06.2002**
(21) Application number: 01921890.8
(22) Date of filing: 18.04.2001
(51) Int. Cl.: G06T 17/40, G06F 3/00

(54) **THREE-DIMENSIONAL MODEL PROCESSING DEVICE, THREE-DIMENSIONAL MODEL PROCESSING METHOD, PROGRAM PROVIDING MEDIUM**

(30) Priority: 19.04.2000 JP 2000117849
(71) Applicant: Sony Corporation, Tokyo 141-0001 (JP)
(72) Inventor: SEGAWA, Hiroyuki, c/o SONY-KIHARA RES. CENTER INC., Shinagawa-ku, Tokyo 141-0022 (JP); HIRAKI, Norikazu, c/o SONY-KIHARA RES. CENTER INC., Shinagawa-ku, Tokyo 141-0022 (JP); SHIOYA, Hiroyuki, c/o SONY-KIHARA RES. CENTER INC., Shinagawa-ku, Tokyo 141-0022 (JP); ABE, Yuichi, c/o SONY-KIHARA RESEARCH CENTER INC., Shinagawa-ku, Tokyo 141-0022 (JP)
(74) Representative: Melzer, Wolfgang, Dipl.-Ing.
(86) International application number: PCT/JP01/03328
(87) International publication number: WO 01/80188

(57) **Abstract**

A three-dimensional model processing apparatus which can more really carry out change processing of shape, color, etc. with respect to the three-dimensional object displayed on display, and an operator operates the object tool in which position change and orientation change can be made and an editing tool in which relative distance with respect to the object tool can be changed to relatively move both tools so that the relative position between the object tool and the editing tool is detected to execute processing, e.g., shape change or coloring processing, etc. set in correspondence with the editing tool on the basis of the detected relative position information between both tools to change shape, color, etc. by attribute change of the object to be edited displayed on display to display it.

## Description

### Technical Field

This invention relates to a three-dimensional model processing apparatus, a three-dimensional model processing method and a program providing medium for implementing processing such as deformation, coloring etc. to three-dimensional model displayed on display of personal computer, etc., and more particularly to a three-dimensional model processing apparatus, a three-dimensional model processing method and a program providing medium which can change various attributes such as shape or color, etc. of three-dimensional model displayed on display in accordance with operation of operator to display it as the result of the fact that operator operates object tool as virtual object corresponding to three-dimensional model displayed on display and various editing tools such as a shape change tool, a coloring tool, etc.

### Background Art

In the field of computer graphics, there have been developed and realized various techniques with respect to apparatuses or methods for displaying three-dimensional graphic on display to execute change processing of orientation or shape, etc. of displayed three-dimensional graphic. As display technique onto display of three-dimensional object, there is a method of inputting shape data of object including depth data by using, e.g., a mouse or a two-dimensional tablet, etc. Further, there is also used a method of acquiring data of actual three-dimensional objects by a three-dimensional digitizer or a three-dimensional scanner to acquire display data on the basis of that data to display such display data on display. In addition, as a method of carrying out processing such as deformation, etc. of object displayed on display, there is known a configuration using input unit comprised of manipulator of the glove type.

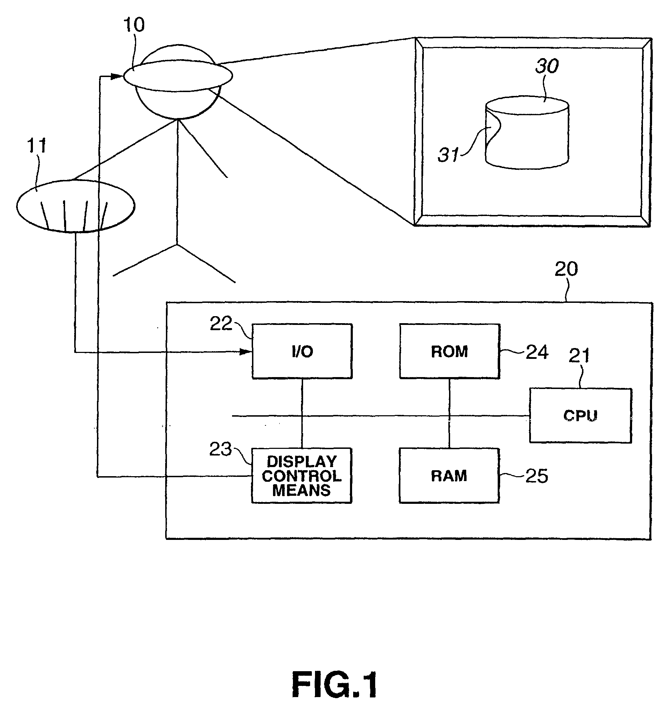

An example of the configuration of a shape change processing apparatus of display object using the manipulator of the glove type is shown in FIG. 1. In FIG. 1, operator fits or attaches a head mount display 10 to observe an object 30 on display. Further, a manipulator 11 of the glove type is fitted or attached at hand of operator.

Pressure sensor or magnetic sensor for detecting movement of hand and finger is attached at the manipulator 11, and movement of hand of operator is detected. A detection signal is inputted to a control unit 20 through an I/O 22. A CPU 21 executes processing in accordance with program stored in a ROM 24 or a RAM 25, and executes change processing, etc. of display parameter relating to the display object 30 in accordance with the detection signal to generate new three-dimensional shape data to display, on the head mount display 10, three-dimensional object 30 based on new display parameter through display control means 23.

For example, in the case where operator executes operation to shave the side surface of the three-dimensional object 30 on display by using the manipulator 11 of the glove type, sensor of the manipulator 11 detects shaving operation of the manipulator 11, and the CPU 21 changes display parameter ofthe displayed object 30 on the basis of detection signal inputted through the I/O 22 to display, on the head mount display 10, displayed object in which shaved portion 31 is formed.

As stated above, in conventional three-dimensional information input systems, various techniques are used. In the previously described processing system using mouses or two-dimensional tablets, since such processing is input processing by two-dimensional information, there exist restriction and/or feeling of disagreement with respect to operation of the three-dimensional object. Further, various processing such as movement, deformation, cutting, etc. with respect to displayed object must be carried out by using only a single editing tool, e.g., mouse, resulting in the problem that operator is difficult to intuitively grasp setting of the editing tool.

Inputs by three-dimensional digitizer and/or three-dimensional scanner are useful for input of shape of virtual objects, but are not suitable for deformation processing, etc. of inputted objects. Such input units are expensive.

Input processing by the manipulator of the glove type is input processing which can be intuitively processed by the operator. However, in practice, any initial setting processing is required before actual processing, e.g., carrying out "push" operation with respect to the object, or carrying out "pull" operation with respect thereto, and there is therefore the drawback that handling is difficult for a user who is unfamiliar with the units. These input units are also considerably expensive.

### Disclosure of the Invention

This invention has been made in view of the problems of the above-described prior art, and its object is to provide a three-dimensional model processing apparatus, a three-dimensional model processing method and a program providing medium in which operator operates respective tools in a form closer to more practical processing by using virtual objects and various tools corresponding to respective processing, thereby making it possible to execute various processing of objects such as shape change, surface coloring, etc. with respect to the three-dimensional by displayed objects.

This invention has been made in view of the above-mentioned task, and includes a display unit for three-dimensionally displayed objects to be edited, an object tool in which movement and orientation change can be made, an editing tool in which relative distance with respect to the object tool can be changed, and processing means for detecting relative position between the object tool and the editing tool to execute processing set in correspondence with the editing tool on the basis of the detected relative positional information to change attribute information ofthe object to be edited displayed on the display unit.

In this invention, the processing means further includes configuration for detecting position information of the changed object tool based on movement and orientation change of the object tool to change attribute information of the object to be edited displayed on the display unit on the basis of the detected position information.

Further, the processing means includes configuration which can execute plural different processing corresponding to the kind of editing tools.

Further, the processing means includes configuration which executes processing set in correspondence with editing tool on the basis of relative position information including at least one of relative distance between the object tool and the editing tool and relative angle between the object tool and the editing tool.

Further, attribute information of objects to be edited that the processing means changes is either one of attribute information relating to shape, color and sound of the object to be edited displayed on the display unit.

Further, the processing means includes configuration for executing functional operation of the object to be edited displayed on the display unit as processing set in correspondence with the editing tool.

Further, this invention is directed to a three-dimensional model processing method for executing various processing with respect to the object to be edited three-dimensionally displayed on a display unit, and this method includes a step of detecting relative position between object tool in which movement and orientation change can be made and editing tool in which relative distance with respect to the object tool can be changed, and a step of executing processing set in correspondence with the editing tool on the basis of the detected relative position information to change attribute information of the object to be edited on display.

This invention further includes a step of detecting position information of the changed object tool based on movement and orientation change ofthe object tool, and a step of changing attribute information of the object to be edited displayed on the display unit on the basis of the detected position information.

This invention further includes a step of discriminating a kind of the editing tool, and serves to execute processing corresponding to the kind of the discriminated editing tool.

Further, at the step of detecting relative position, relative position including at least either one of relative distance between the object tool and the editing tool and relative angle between object tool and editing tool.

Further, attribute information is either one of attribute information relating to shape, color and sound of object to be edited displayed on display means.

In this invention, functional operation ofthe object to be edited displayed on the display unit is executed as processing set in correspondence with the editing tool.

In addition, this invention is directed to a program providing medium for providing computer program for executing, on computer system, three-dimensional model processing which executes various processing with respect to the object to be edited three-dimensionally displayed on a display unit, wherein the computer program recorded with respect to this recording medium includes a step of detecting relative position between object tool in which movement and orientation change can be made and the editing tool in which relative distance with respect to the object tool can be changed, and a step of executing processing set in correspondence with the editing tool on the basis of the detected relative position information to change attribute information of the object to be edited displayed on display means.

The program providing medium adapted so that computer program is recorded is medium for providing, in a form such that computer can read, computer program with respect to, e.g., widely used computer system which can execute various program codes. As the medium, there are recording medium such as CD, FD or MO, etc., and transmission medium such as network, etc. and their forms are not particularly limited.

Such program providing medium defines cooperative relationship in structure or function between the computer program and the providing medium for realizing function of a predetermined computer program on computer system. In other words, by installing computer program into the computer system through the providing medium, the cooperative action is exhibited in the computer system.

Still further objects of this invention and more practical merits obtained by this invention will become more apparent from the description of embodiments which will be given below.

### Brief Description of the Drawings

FIG. 1 is a block diagram for explaining conventional three-dimensional model processing configuration using glove type manipulator.
FIG. 2 is a block diagram showing the configuration of a three-dimensional model processing apparatus according to this invention.
FIG. 3 is a view for explaining outline of processing in the three-dimensional model processing apparatus according to this invention.
FIG. 4 is a view showing an example of the configuration in which a tablet is used in input unit in the three-dimensional model processing apparatus according to this invention.
FIG. 5 is a view showing an example of the configuration in which magnetic sensors are used in input unit in the three-dimensional model processing apparatus according to this invention.
FIG. 6 is a view showing an example of the configuration in which ultrasonic sensors are used in input unit in the three-dimensional model processing apparatus according to this invention.
FIG. 7 is a view showing an example of the configuration in which ultrasonic transponders are used in input unit in the three-dimensional model processing apparatus according to this invention.
FIG. 8 is a view showing, as flowchart, processing in the three-dimensional model processing apparatus according to this invention.
FIG. 9 is a view showing, as flowchart, processing in the case where a trowel is used as the editing tool in the three-dimensional model processing apparatus according to this invention.
FIG. 10 is a view showing, as data flow diagram, processing in the case where a trowel is used as the editing tool in the three-dimensional model processing apparatus according to this invention.
FIG. 11 is a view showing, as flowchart, processing in the case where a pinch is used as the editing tool in the three-dimensional model processing apparatus according to this invention.
FIG. 12 is a view showing, as data flow diagram, processing in the case where a pinch is used as the editing tool in the three-dimensional model processing apparatus according to this invention.
FIG. 13 is a view showing, as flowchart, processing in the case where a brush is used as the editing tool in the three-dimensional model processing apparatus according to this invention.
FIG. 14 is a view showing, as data flow diagram, processing in the case where a brush is used as the editing tool in the three-dimensional model processing apparatus according to this invention.
FIG. 15 is a view showing, as flowchart, processing in the case where a spray is used as the editing tool in the three-dimensional model processing apparatus according to this invention.
FIG. 16 is a view showing, as data flow diagram, processing in the case where a spray is used as the editing tool in the three-dimensional model processing apparatus according to this invention.
FIG. 17A shows action area in the case where a spray is used as the editing tool in the three-dimensional model processing apparatus according to this invention, and FIG. 17B is a view showing coloring range in the case where spray is used as editing tool.
FIGS. 18A, 18B and 18C are views for explaining more practical examples of the configuration using the three-dimensional model processing apparatus according to this invention.
FIG. 19 is a view for explaining a more practical example of the configuration using the three-dimensional model processing apparatus according to this invention.

### Best Mode for Carrying Out the Invention

This invention will now be described with reference to the attached drawings.

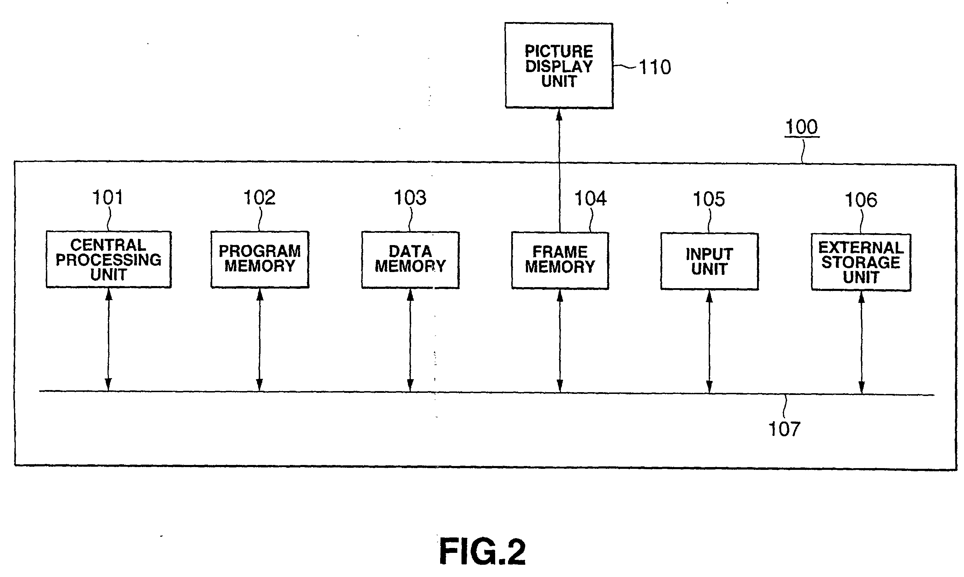

FIG. 2 shows a block diagram showing an embodiment of a three-dimensional model processing apparatus according to this invention. The three-dimensional model processing apparatus 100 of this embodiment includes central processing unit (CPU) 101 for executing processing program, program memory 102 into which processing program is stored, data memory 103 in which processing data and information such as attribute of position, orientation, shape, color, etc. ofthe object to be edited or attribute of editing tool, etc. are stored, frame memory 104 in which picture information for displaying, on picture display unit 110, object to be edited, editing tool and instruction to user, etc. are stored, input unit 105 for inputting various instructions with respect to the object to be edited, external storage unit 106 for storing observation information or processing result, and bus 107 for permitting data transfer between these respective units. The picture display unit 110 is connected through the frame memory 104. Thus, picture data stored in the frame memory 104 is displayed. The input unit 105 which is characterized means in this invention is constituted by plural groups of tools for carrying out various processing such as deformation, surface color change, etc. with respect to the object to be edited having three-dimensional shape displayed on the picture display unit 110.

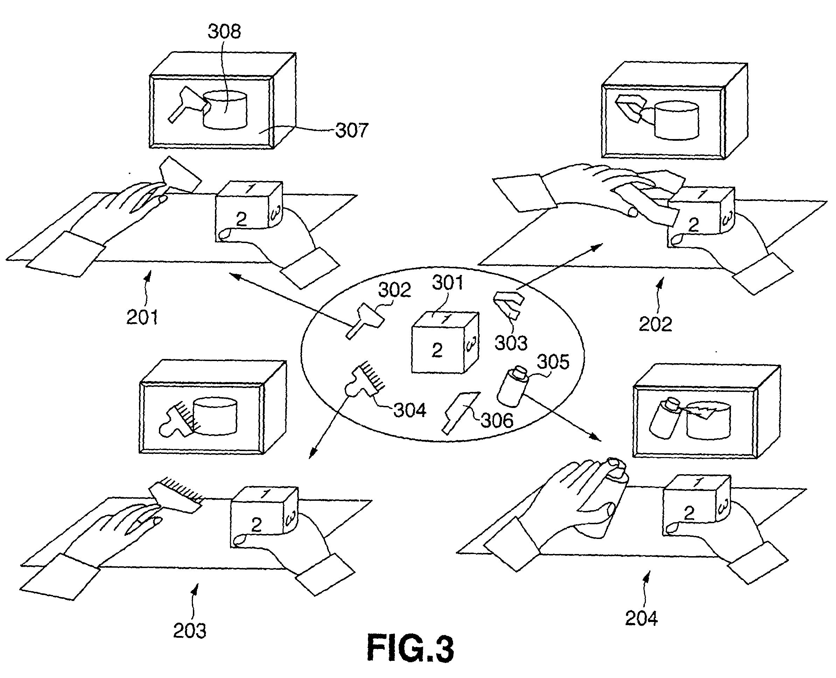

Prior to more practical description of respective means of FIG. 2, the concept of this invention will be described with reference to FIG. 3. The three-dimensional model processing apparatus of this invention includes, as shown in FIG. 3, object tool 301 corresponding to the object to be edited and editing tools 302 to 306 for implementing various processing to the object to be edited, which are displayed on display. By using these tools, processing such as deformation, coloring, etc. with respect to object 308 to be edited displayed on display 307 is executed.

In FIG. 3, as editing tools, there are shown push tool 302 having, e.g., shape of "trowel" for executing "push" operation with respect to the object to be edited, pull tool 303 having shape of pinch for executing "pull" operation with respect to the object to be edited, brush tool 304 having, e.g., shape of"brush" for executing "fine coloring" operation with respect to the object to be edited, spray tool 305 having, e.g., shape of "color spray" for executing "rough coloring" operation with respect to the object to be edited, and cut tool 306 having, e.g., shape of "knife" for executing "cut off, separate" operation with respect to the object to be edited.

As the result of the fact that operator operates various tools shown in FIG. 3 in a predetermined action area (sensor detection area) as indicated by 201 to 204 in FIG. 3, in more practical sense, carries out change of distance between object tool 301 and editing tools 302 to 306 and change of angle therebetween, processing corresponding to respective tools, i.e., deformation ofthe object to be edited corresponding to "push" operation by push tool 302 and "pull" operation by pull tool 303, and/or change of surface color of the object to be edited corresponding to brush tool 304 and spray tool 305 are implemented to object 308 to be edited displayed on display 307.

As metaphor of clay model subject to operation such as deformation or coloring, etc., input information from sensor for detecting position and orientation in the three-dimensional space is used. This is clay object sensor, and tool 301 for object of FIG. 3. The object tool may be three-dimensional shape as shown in FIG. 3, spherical shape or shape approximate to the object to be edited displayed on display. This object tool 301 has the configuration that operator can hold it by one hand so that it can be freely moved or rotated.

Moreover, editing tool metaphor for carrying out deformation or coloring with respect to the object to be edited also has, as parameter, input information from sensor for detecting position and orientation in the three-dimensional space. The editing tool has shape that operators can intuitively associate processing mode in accordance with respective processing. Namely, as shown in FIG. 3, there are shape of"trowel" as push tool 302. shape of "pinch" as pull tool 303, shape of "brush" as brush tool 304, shape of "spray" as spray tool 305 and shape of "knife" as cut tool 306, etc.

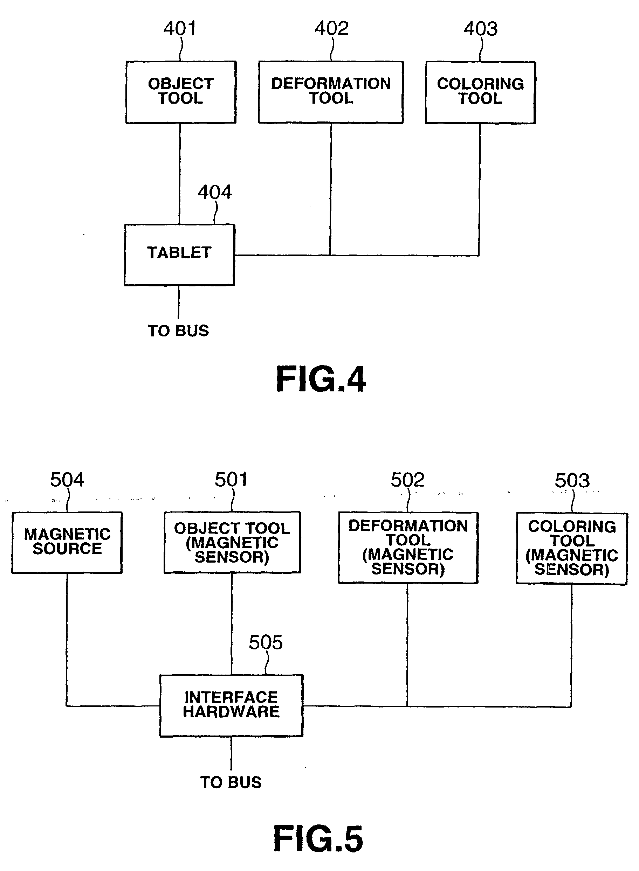

These object tool 301 and editing tools 302 to 306 correspond to the input unit 105 in FIG. 2, and more practical example of the configuration of this input unit will be described with reference to FIGS. 4 to 7. It is to be noted that, in FIGS. 4 to 7, the editing tools 302 to 306 are described in the state roughly divided into tool for deformation and tool for color without finely classifying them.

FIG. 4 is an example where input unit is constituted with tablet 404. Position information and orientation information of object tool 401, deformation tool 402 and coloring tool 403 are detected by input through input tablet 404, and detection data are inputted. Detection function by chip or coil is added to the object tool 401, the deformation tool 402 and the coloring tool 403 similarly to input pen associated with conventional tablet, and position and orientation information of respective tools are detected. When coils from which detection values different from each other are obtained are provided on respective surfaces 1 to 6 of object tool 301 of hexahedron as shown in FIG. 3, for example, mounting surfaces on the tablet are discriminated, thus making it possible to obtain three-dimensional information from these mounting surfaces. Alternatively, there may be employed a configuration in which Z-axis information obtained from other optical sensor or magnetic sensor is combined with XY axis two-dimensional information obtained from tablet to thereby discriminate three-dimensional position to obtain three-dimensional data.

FIG. 5 is an example where input unit is constituted by using magnetic sensors. The area within magnetic field produced from magnetic source 504 is caused to be action area, and operations by object tool 501, deformation tool 502 and coloring tool 503 are carried out within the action area. Magnetic sensors are respectively attached to the object tool 501, the deformation tool 502 and the coloirng tool 503, and the magnetic sensors of the object tool 501, the deformation tool 502 and the coloirng tool 503 output magnetic displacement data to dedicated interface hardware 505 within the action area set within magnetic field produced from the magnetic source 504. The dedicated interface hardware 505 calculates position information data, orientation information data of respective tools on the basis of these data. It is to be noted that the dedicated interface hardware 505 shown in FIG. 5 may be replaced by calculation processing program of software.

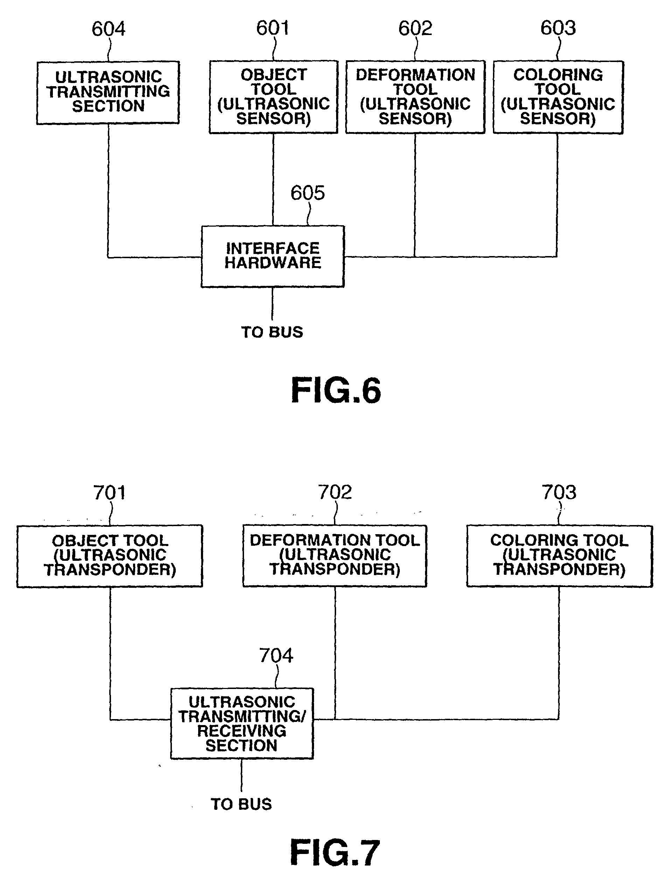

FIG. 6 is an example where the input unit is constituted by using ultrasonic sensors. The area where ultrasonic wave produced from a ultrasonic transmitting section 604 can be detected is caused to be action area, and processing operations by object tool 601, deformation tool 602 and coloring tool 603 are carried out within the action area. Ultrasonic sensors are respectively attached to the object tool 601, the deformation tool 602 and the coloring tool 603, and the ultrasonic sensors of the object tool 601, the deformation tool 602 and the coloring tool 603 within the action area which is the area where ultrasonic wave produced from the ultrasonic transmitting section 604 can be detected detect arrival times from source of ultrasonic wave or interference of ultrasonic wave, etc. Dedicated interface hardware 605 calculates position information data and orientation information source data of respective tools on the basis of these data. It is to be noted that the dedicated interface hardware 605 shown in FIG. 6 may be replaced by calculation processing program of software.

FIG. 7 is a second example where the input unit is constituted by using ultrasonic sensor. A ultrasonic transmitting/receiving section 704 carries out transmitting and receiving of ultrasonic wave. The area where ultrasonic wave produced from the ultrasonic transmitting/receiving section 704 can be detected is caused to be action area, and processing operations by object tool 701, deformation tool 702 and coloring tool 703 are carried out within the action area. Transponders having a function to receive ultrasonic wave produced from the ultrasonic transmitting/receiving section 704 to send back it are respectively attached at the object tool 701, the deformation tool 702 and the coloring tool 703. The ultrasonic transmitting/receiving section 704 receives ultrasonic waves sent back from respective tools to detect time required for going and returning of ultrasonic wave or interference of ultrasonic wave, etc. to calculate position information data and orientation information source data of respective tools on the basis of these data.

The input unit 105 shown in FIG. 2 is realized as input device using various sensors as described above. It is to be noted that information input/output with respect to three-dimensional model processing apparatus 100 from sensors of respective tools may be configuration through data line of wire or wireless data transmitting/receiving configuration. In addition, as the configuration of the input unit 105, there may be employed combination of the various sensors.

As the external storage unit 106 shown in FIG. 2, random accessible memory medium such as hard disk drive (HDD) or optical disk, etc. is desirable. In addition to the above, the external memory unit may be constituted by tape streamer or nonvolatile semiconductor memory represented memory stick. In addition, it is also possible to utilize external storage unit of network-connected other system.

The central processing unit (CPU) 101 executes processing in accordance with processing program recorded in the program memory 102.

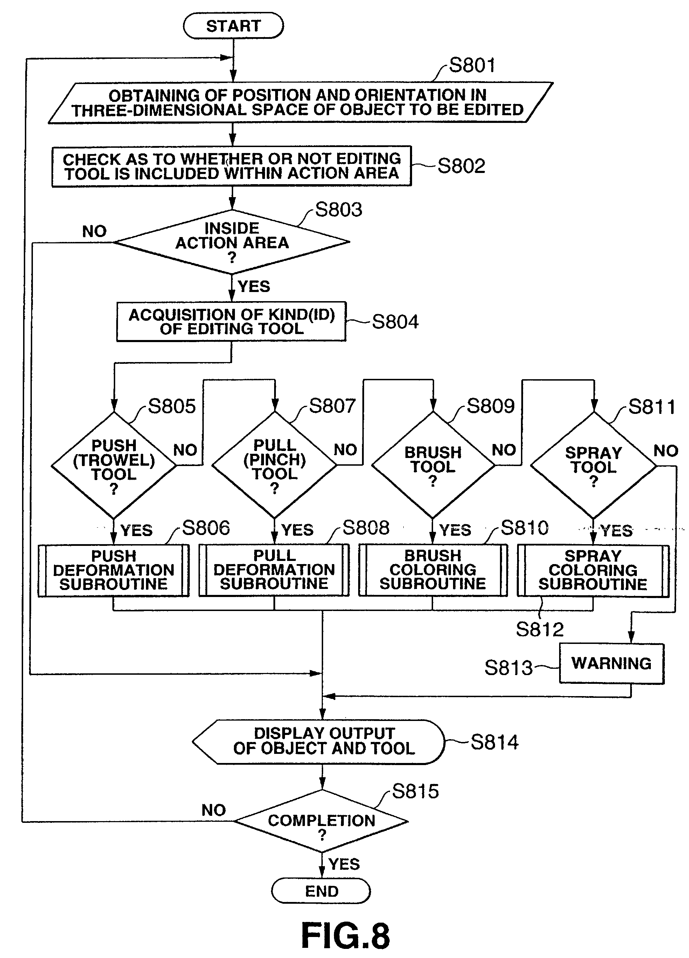

Flow of processing using the three-dimensional model processing apparatus shown in FIG. 2 will now be described in accordance with the processing flow of FIG. 8. The processing flow shown in FIG. 8 is processing executed in accordance with processing program recorded in the program memory 102.

In FIG. 8, the example of the case where push tool 302, pull tool 303, brush tool 304 as coloring tool and spray tool 305 which have been explained with reference to FIG. 3 are used as editing tool will be explained. In addition to the above, it is possible to use various editing tools for executing various processing.

Initially, at step S801 of FIG. 8, data of position and orientation, etc. on the three-dimensional space of the object to be edited are acquired. Such data are data stored in the data memory 103 shown in FIG. 2 and corresponding to attribute data such as position, orientation, shape, color, etc. of the object to be edited displayed on the picture display unit 110. Initial position of the object tool 301 shown in FIG. 3 is set as position and orientation corresponding to these attribute data. Thereafter, in the case where operator moves object tool 301 within the action area which is the area where position detection by sensor can be made, the position and the orientation are detected by sensor output of the object tool 301, and attribute is rewritten in accordance with movement. Thus, the object to be edited is displayed on the picture display unit 110 on the basis of the rewritten attribute.

Then, at step S802, whether or not tool, i.e., object tool and editing tool such as deformation, and coloring, etc. are included within the action area is checked. The action area is each detectable area of various sensors used as the input unit. In the case where tablet is used as the input unit, the action area is tablet area. In the case where a magnetic sensor is used as the input unit, the action area is detectable area of the magnetic sensor. In the case where an ultrasonic sensor is used as the input unit, the action area is detectable area of the ultrasonic sensor.

When it is judged at step S803 that tool is not included within the action area, processing jumps to step S814. In the case where it is judged that tool is included within the action area, processing proceeds to step S804 to judge the kind (ID) of tool. The judgment of the tool kind here is judgment with respect to the kind of editing tool such as deformation, coloring, etc. With respect to the kind of these editing tools, operator himself may designate the tool to input identification data (ID) indicating the tool kind, or may employ configuration for outputting identification signal (ID) from editing tool existing in the action area to carry out discrimination of the tool on the basis of identification signal.

When the kind of editing tool is judged at the step S804, processing proceeds to processing of steps S805 to S812. The processing from the step S805 to the step S806 is processing in the case where the editing tool is push tool, the processing from the step S807 to the step S808 is processing in the case where the editing tool is pull tool, the processing from the step S809 to the step S810 is processing in the case where the editing tool is brush tool, and the processing from the step S811 to the step S812 is processing in the case where the editing tool is spray tool. The respective processing of the steps S806, S808, S810, S812 are subroutines corresponding to respective tools, and are called at the time point when the editing tool is specified and are executed. In the case where the editing tool does not correspond to any tool, processing proceeds to step S813, at which warning is produced. Such warning is, e.g., processing for displaying warning message on the picture display unit 110 shown in FIG. 2, or outputting warning sound, etc.

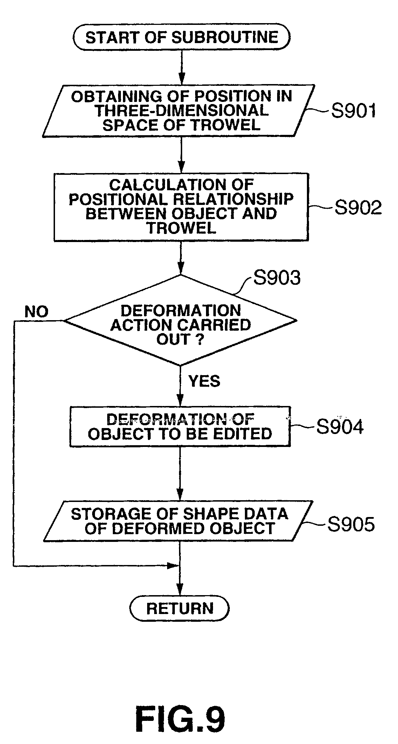

Explanation will be given below with reference to FIG. 9 and figures succeeding thereto in connection with respective processing of the steps S806, S808, S810, S812, i.e., subroutine processing corresponding to respective editing tools.

At step S814, respective editing tools are displayed on the picture display unit 110, and display of the object to be edited processed by the editing tool is carried out. The display modes (form) of respective editing tools are modes based on shape data set every editing tool in advance. For example, if the editing tool is push tool, shape of "trowel" is displayed on the picture display unit 110. If the editing tool is spray tool, shape of "spray" is displayed on the picture display unit 110. Moreover, the object to be edited is displayed as object to which deformation or coloring is applied by each editing tool. Namely, objects to be edited in which attributes such as position, orientation, shape, color, etc. of the object to be edited changed by respective editing tools are reflected are displayed. Attributes of objects to be edited rewritten by operation by operator of respective editing tools are stored into the data memory 103 shown in FIG. 2.

Further, at step S815, completion of processing is judged. Completion of processing may be input from user who is operator, or rule prescribed within the processing application. For example, in the case of game program, completion of processing may be completion command by game over. In addition, judgment of completion based on restriction of hardware or software such as memory full, etc. may be carried out. In the case where it is judged at the step S815 that processing is not completed, processing returns to start of the processing flow to repeatedly execute similar processing.

The detail of the subroutine processing shown in FIG. 8 will now be described. FIG. 9 is a flow for explaining processing in the case where push tool is applied to the object to be edited to apply deformation. Step S901 is step for obtaining position/orientation data on the three-dimensional space of "trowel" used as push tool. As previously described, such data are data obtained on the basis of respective sensor outputs in accordance with the kind of input unit utilized, i.e., tablets, magnetic sensors or ultrasonic sensors.

Then, step S902 is processing for determining space relationship/relative position between the object to be edited and the editing tool from position/orientation data of the object to be edited which has been acquired at the previously mentioned step S801 of FIG. 8 and position/orientation data of editing tool "trowel" determined at the step S901.

Then, at step S903, judgment as to whether or not deformation processing of the object to be edited using editing tool "trowel" is executed is carried out. In more practical sense, this judgment serves to carry out whether or not position data of editing tools detected by various sensors are admitted into the object to be edited. It is to be noted that it is not necessary that editing tools 302 to 306 are actually in the object tool 301 in FIG. 3 in this case, but there may be employed configuration to execute processing which determines that in the case where both tools are close so that the distance therebetween is less than a predetermined value, it is judged that the editing tool is admitted into the object to be edited.

Alternatively, object tool 301 may be constituted with, e.g., deformable sponge shaped material to also employ configuration such that editing tool can actually enter the object tool 301. In this case, there may be employed a configuration to execute deformation of the object to be edited displayed on the picture display unit 110 on the basis of actual position data of the editing tool and the object tool in a manner caused to be in correspondence with the actual position data.

Deformation processing of the object to be edited displayed on the picture display unit 110 at step S904 can be realized by moving positions of vertices of polygons when display data is polygons data. In this case, in the case where distance between vertices is greatly apart, processing for generating new vertices is executed. Moreover, in the case where the object to be edited is represented as parametric curves, their control points are moved. Further, in the case where the object to be edited is represented by voxels, deformation can be realized by (Boolean operation) processing to add data. The deformation processing is carried out in accordance with data mode (form). In either case, processing based on displacement data of relative distance between object tool and editing tool is carried out.

After deformation processing of the object to be edited is executed at the step S904, rewritten attribute data of the object to be edited of deformed result is stored into the data memory 103 or external storage unit 106 shown in FIG. 2 at step S905.

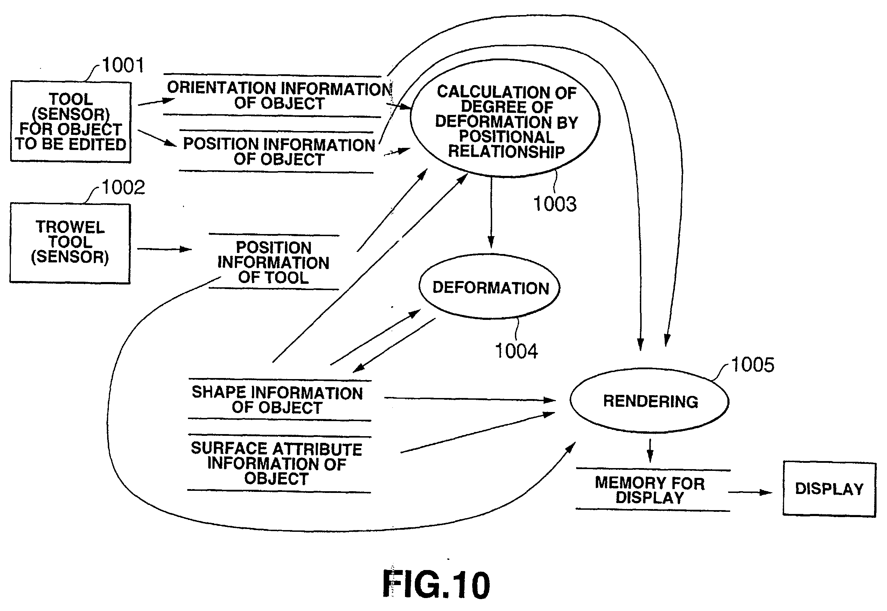

In order to supplement explanation of the flowchart shown in FIG. 9, explanation will be further given in connection with processing in the case where push tool "trowel" is used with reference to the data flow diagram of FIG. 10. The data flow diagram is a view showing flow of data extending from data source within the object to target within other object via process for converting data. The data flow diagram is constituted by processes (indicated as ellipses) for converting data, data flows (indicated as arrows) for carrying data, actor objects (indicated as rectangles) indicating production and consumption of data, and data store objects (indication put between two lines) for passively carrying out storage of data.

The data flow of FIG. 10 is processing by push tool "trowel", and processing is started by operation of the object tool (sensor) 1001 as an actor object and the trowel tool (sensor) 1002.

From the object tool 1001, orientation information and position information of the object are acquired. From the trowel tool 1002, position information of the tool is acquired.

Further, from shape information of the object which is attribute of the object to be edited which has been acquired in advance, surface attribute information of the object, orientation information and position information of object and position information of tool which are stored in the data memory 103 of FIG. 2, calculation processing 1003 of degree of deformation is executed. On the basis of this calculation, processing for changing attribute information, i.e., deformation processing 1004 is executed. In combination with these processing, rendering processing 105 as processing for generating display picture with respect to the picture display unit 110 is executed. Thus, rendering processing result is stored in the memory for display, i.e., the frame memory 104 of FIG. 2, and is displayed on the picture display unit 110.

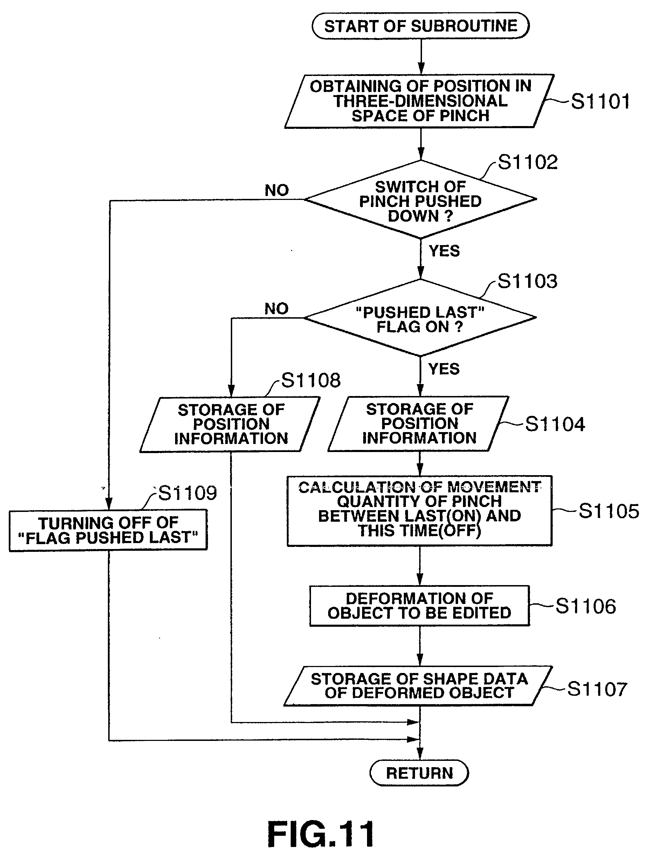

FIG. 11 is a flow for explaining processing in the case where pull tool "pinch" is applied to the object to be edited to apply deformation. Step S1101 is step for obtaining position data and orientation data on the three-dimensional space of "pinch" used as pull tool. As previously described, such data are data obtained on the basis of respective sensor outputs in accordance with kind of input unit utilized, i.e., tablets, magnetic sensors and ultrasonic sensors.

Then, at step S1102, whether or not the switch of the pinch is pushed down is judged. The pull tool "pinch" of this embodiment has the configuration in which the switch is provided at the pull tool "pinch" for determining the start point and the end point of the pull operation to set the position at the time point when the switch is pushed down as the start point ("ON") or the end point ("OFF") of the pull operation with respect to the object to be edited. When it is judged at the step S1102 that the switch is not pushed down, processing for turning OFF "flag to show it was pushed down last" is executed at step S1109 thereafter to execute processing to return to end position, i.e., flow start position.

When it is judged at the step S1102 that the switch has been pushed down, processing proceeds to step S 1103, at which whether or not "flag to show it was pushed down last" is turned ON is judged. In the case where "flag to show it was pushed down last" is not turned "ON", it is judged that push down of switch of this time is "ON", i.e., current position is start position of the pull operation. At step S1108, processing for storing position information of pull tool "pinch" of switch-pushing-down-position into the data memory 103 to return to flow start position is executed.

When it is judged at the step S 1103 that "flag to show it was pushed down last" is turned ON, it is judged that the current switch pushing down of this time is "OFF" and this time period is execution period of the pull operation. In this case, at step S1104, position information of the switch pushing position, i.e., position information as end position of the pull operation is stored into the data memory 103.

At the subsequent step S 1105, movement quantity of the pull tool "pinch" from the last switch-pushing-down-point to the switch-pushing-down-point of this time is calculated. This movement quantity is effective processing period of the pull operation. At the subsequent step S 1106, deformation processing of object is executed on the basis of movement quantity determined at the step S1105. At step S1107, new attribute information obtained by deformation processing, i.e., shape data of object is stored into the data memory. Display of object is carried out on the picture display unit 110 on the basis of new attribute information.

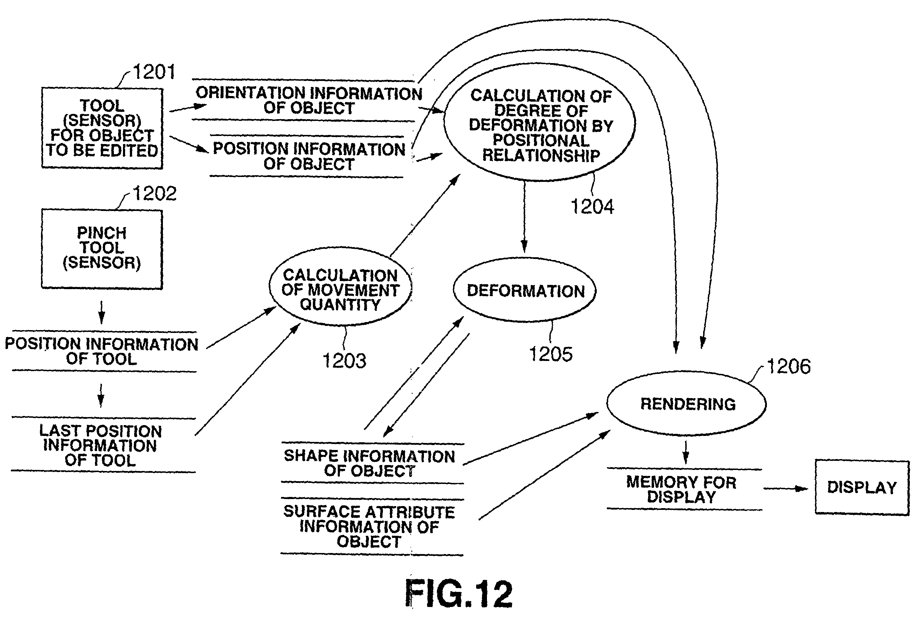

For supplementing the description of the flowchart shown in FIG. 11, explanation will be further given in connection with the case where the pull tool "pinch" is used with reference to the data flow diagram of FIG. 12. In FIG. 12, processing is started by operation of object tool (sensor) 1201 as actor object and pinch tool (sensor) 1202.

From the object tool 1201, orientation information and position information of object are acquired. From the pinch tool 1202, two position information of position information of the tool and the last position information of tool are acquired. These information correspond to start position and end position of the pull operation by pinch.

On the basis of two position information of tool, calculation processing 1203 of movement quantity of the tool is executed. On the basis of the calculated movement quantity and position information and orientation information of object, calculation processing 1204 of deformation quantity of object is executed.

Further, on the basis of the calculation processing result of this deformation quantity, change processing of attribute information, i.e., deformation processing 1205 is executed. In combination with these processing, rendering processing 1206 as processing for generating display picture with respect to the picture display unit 110 is executed. Thus, rendering processing result is stored into the memory for display, i.e., the frame memory 104 of FIG. 2 and is displayed on the picture display unit 110.

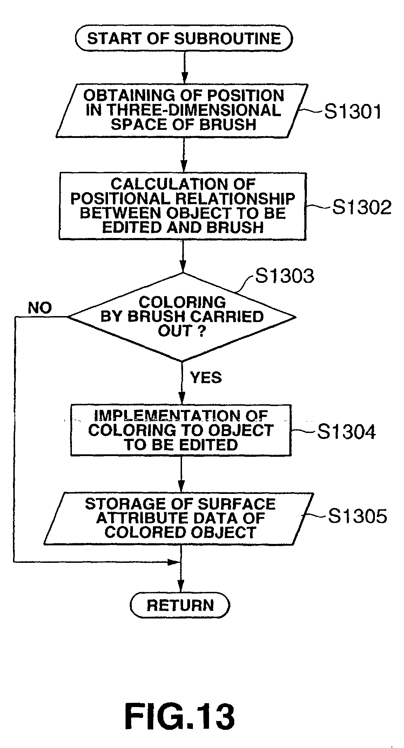

FIG. 13 is a flow for explaining processing in the case where the brush tool as a coloring tool is applied to the object to be edited to apply coloring. Step S1301 is a step for obtaining position/orientation data on the three-dimensional space of "brush" used as a tool. Such data are obtained on the basis of respective sensor outputs in accordance with kind of input unit utilized, i.e., tablets, magnetic sensors and ultrasonic sensors as previously described.

Then, at step S1302, space relationship/relative position between the object to be edited and the editing tool is determined from position/orientation data of the object to be edited which has been acquired at the previously mentioned step S801 of FIG. 8 and position/orientation data of the editing tool "brush" which has been determined at the step S1301.

Then, at step S1303, judgment as to whether or not deformation processing of the object to be edited using editing tool "brush" is executed is carried out. Such judgment may be such that, e.g., similarly to the previously described pull tool "pinch", switch is provided at brush to detect push-down of switch, or there may be employed such a configuration to carry out coloring by brush when distance between the object to be edited and the editing tool which is determined at the step S1302 is less than a predetermined distance.

At the subsequent step S1304, coloring processing with respect to the object is executed. The operator sets in advance color in this instance. After coloring processing of the object to be edited is executed at the step S1304, rewritten attribute data of the object to be edited of colored result is stored into the data memory 103 or the external storage unit 106 shown in FIG. 2 at step S1305.

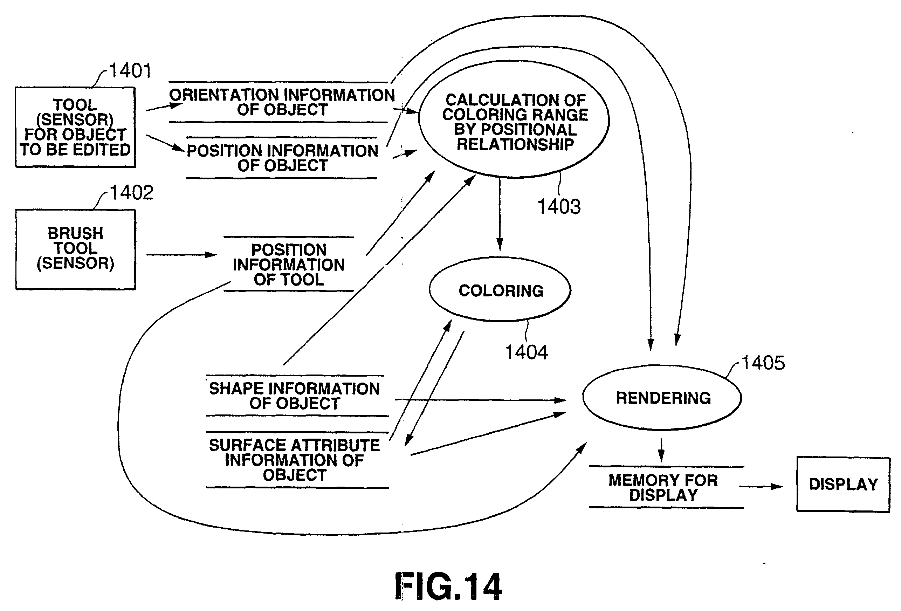

For supplementing explanation of the flowchart shown in FIG. 13, explanation will be further given in connection with processing in the case where coloring tool "brush"is further used with reference to the data flow diagram of FIG. 14. In the data flow of FIG. 14, processing is started by operation of object tool (sensor) 1401 as actor object and brush tool (sensor) 1402.

From the object tool 1401, orientation information and position information of object are required. From the brush tool 1402, position information of tool is acquired.

Further, from shape information of object which is attribute of the object to be edited which has been acquired in advance, orientation information and position information of the object and position information of tool which are stored in the data memory 103 of FIG. 2, calculation processing 1403 of coloring range is executed. On the basis of this calculation result and surface attribute information of the object, change processing of attribute information, i.e., coloring processing 1404 is executed. In combination with these processing, rendering processing 1405 as processing for generating display picture with respect to the picture display unit 110 is executed, and rendering processing result is stored into memory for display, i.e., the frame memory 104 of FIG. 2 and is displayed on the picture display unit 110.

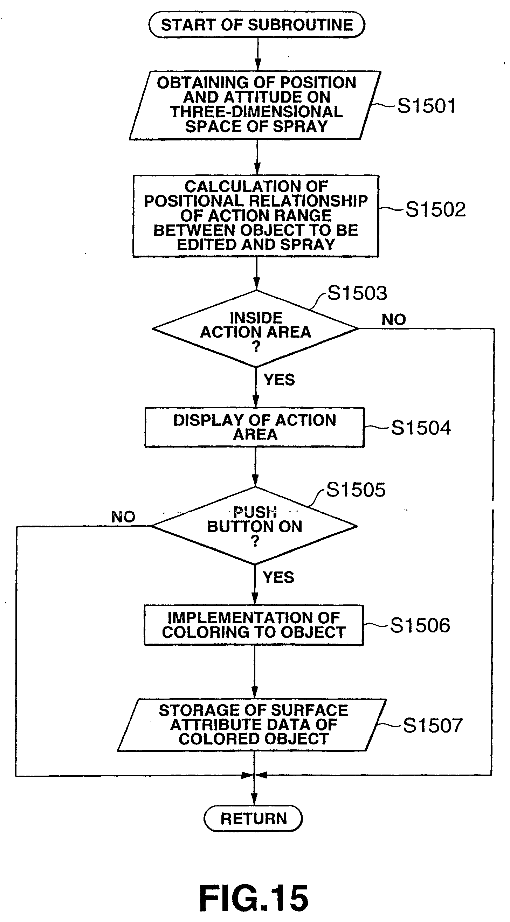

FIG. 15 is a flow for explaining processing in the case where the spray tool as a coloring tool is applied to the object to be edited to apply coloring. Step S1501 is step for obtaining position/orientation data in the three-dimensional space bof "spray" used as coloring tool. As previously described, such data are data obtained on the basis of respective sensor outputs in accordance with kind of input unit utilized, i.e., tablets, magnetic sensors and ultrasonic sensors.

Then, at step S1502, the positional relationship of action range between the object to be edited and the spray is determined from position/orientation data of the object to be edited which has been acquired at the previously mentioned step S801 of FIG. 8 and position/orientation data of editing tool "spray" determined at the step S1501.

Then, at step S1503, whether or not the positional relationship of action range between the object to be edited and the spray which has been determined at the step S1502 falls within the action area of editing tool "spray" is judged. At the editing tool "spray", area which can be colored by that spray is set in advance. In order that the object to be edited is colored, there results the condition where the positional relationship of action range between the object to be edited and spray falls within the action area of the editing tool "spray". In this case, the action area of the spray is set as attribute of tool in advance.

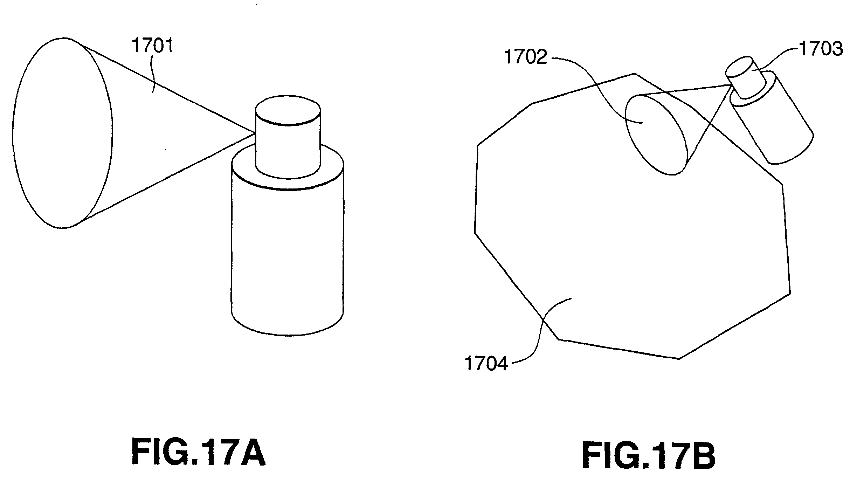

It is to be noted that, in the spray tool, the action area is set as conical area 1701 in which predetermined points of the spray tool are caused to be vertices as indicated by FIG. 17A, for example, and coloring range 1702 with respect to object is set within the action area on object 1704 surface as shown in FIG. 17B. Push button 1703 is provided at the spray tool, and coloring range 1702 is set on the basis of the positional relationship at the time point when the push button 1703 is pushed down.

When it is judged at the step S1503 that corresponding area is outside the action area of the editing tool "spray", coloring processing by spray is not executed. As a result, processing is completed. Thus, the routine is returned to the start position. When it is judged at the step S1503 that corresponding area is inside the action area of the editing tool "spray", the action area is displayed on the picture display unit 110 at step S1504.

Then, at step S1505, switch of the editing tool "spray" is pushed down, and whether or not the switch is turned ON is judged. With the fact that the switch has been turned ON being as the condition, coloring processing with respect to object is executed at step S1506. The operator sets in advance color in this instance. After coloring processing of the object to be edited is executed at step S1506, rewritten attribute data of the object to be edited of colored result is stored into the data memory 103 or the external storage unit 106 shown in FIG. 2 at step S1507.

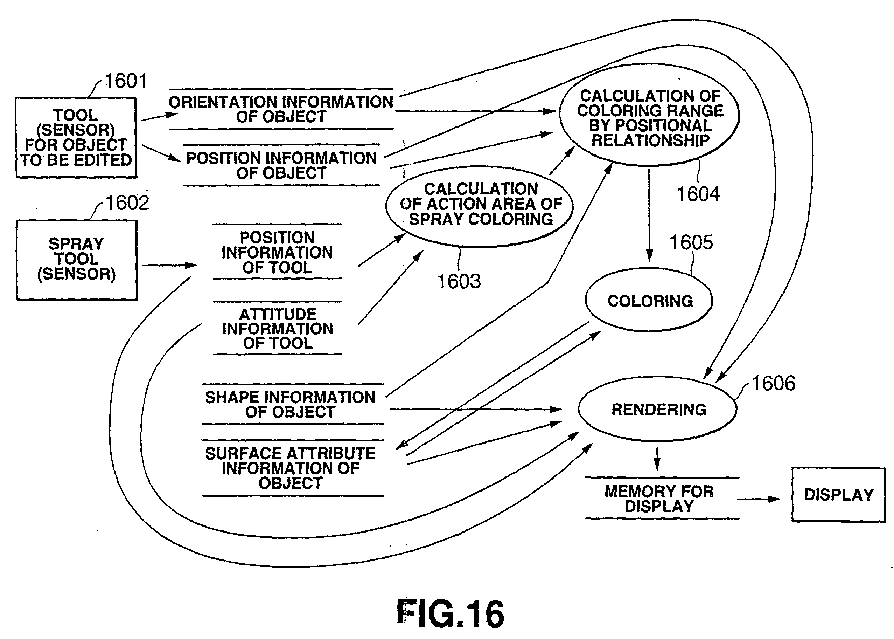

For supplementing the description of the flowchart shown in FIG. 15, explanation will be further given in connection with processing in the case where the coloring tool "spray" is used with reference to the data flow diagram of FIG. 16. In the data flow of FIG. 16, processing is started by operation ofthe object tool (sensor) 1601 as actor object and spray tool (sensor) 1602.

From the object tool 1601, orientation information and position information of the object are acquired. From the spray tool 1602, position information and orientation information of tool are acquired.

On the basis of the position information and the orientation information of the spray tool, calculation processing 1603 of the action area which can be colored by spray is executed.

Further, calculation processing 1604 of the coloring range is carried out on the basis of shape information of the object which is attribute of the object to be edited which has been acquired in advance, orientation information and position information of object, and calculated action area of spray which are stored in the data memory 103 of FIG. 2, and change processing of attribute information, i.e., coloring processing 1605 is executed on the basis of this calculation. In combination with these processing, rendering processing 1606 as processing for generating display picture with respect to the picture display unit 110 is executed, and rendering processing result is stored into the memory for display, i.e., the frame memory 104 of FIG. 2 and is displayed on the picture display unit 110.

As stated above, in accordance with the three-dimensional model processing apparatus of this invention, the operator uses the object tool corresponding to the object to be edited and various dedicated tools to execute change operation of relative position between both tools, whereby the processing unit executes processing set in advance in accordance with the dedicated tool. As a result, processing corresponding to respective editing tools such as deformation or coloring, etc., i.e., attribute change is carried out with respect to the object to be edited displayed on the picture display unit, and display of its result is executed. Accordingly, operator can execute various processing with such a feeling to directly implement processing to the object to be edited on picture.

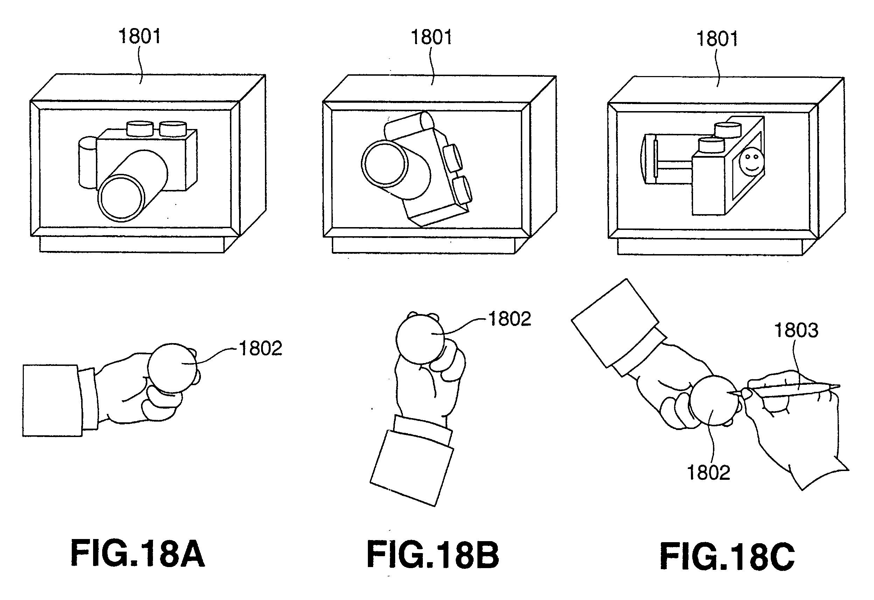

Explanation will now be given in connection with the more practical example of application in the three-dimensional model processing apparatus of this invention. The example where the three-dimensional model processing apparatus ofthis invention is applied to on-line shopping using communication network such as internet, etc. is shown in FIGS. 18A to 18C.

The three-dimensional model processing apparatus of this invention is constituted within, e.g., personal computers of users to display, on display 1801, goods from provider who provides on-line shopping. Such goods display may be carried out by storing three-dimensional picture data relating to goods provided from provider through network into storage unit such as memory, hard disk, etc. within the computer of the user to read out such data, or may be carried out by using data stored on medium, e.g., CD or DVD, etc. that the goods provider provides.

The user who studies goods displays three-dimensional picture of goods on display 1801 to hold, by one hand, object tool (goods metaphor) 1802 corresponding to the display goods and to hold, by the other hand, operation tool (tool metaphor) 1803 for executing various processing with respect to goods. User who studies goods can relatively operate goods metaphor 1802 and tool metaphor 1803 to execute processing corresponding to respective tool metaphors with respect to goods displayed on display. For example, by changing angle/orientation of goods metaphor 1802, article displayed on display is displayed in the state where angle/orientation is changed in a manner from FIG. 18A to FIG. 18B. Thus, user can observe goods or articles from all angles.

Further, for example, the previously described push tool is used as tool metaphor 1803, and push operation is executed by tool which pushes each operation button portions of goods metaphor corresponding to video camera which is article by the push tool as shown in FIG. 18C, thereby making it possible to employ such a configuration that operation button portion of video camera on the display 1801 is pushed down so that processing corresponding to push-down operations of each operation button is executed on the display.

This is realized by employing a configuration such that each switch position of the object to be edited is specified on the basis of position information of the push tool to execute processing program corresponding to specified switch. By program execution corresponding to the switch, operation display of goods within display 1801 is carried out. In a manner as stated above, user can actually obtain feeling to practically hand or hold article to operate it by relative operation between goods metaphor and tool metaphor.

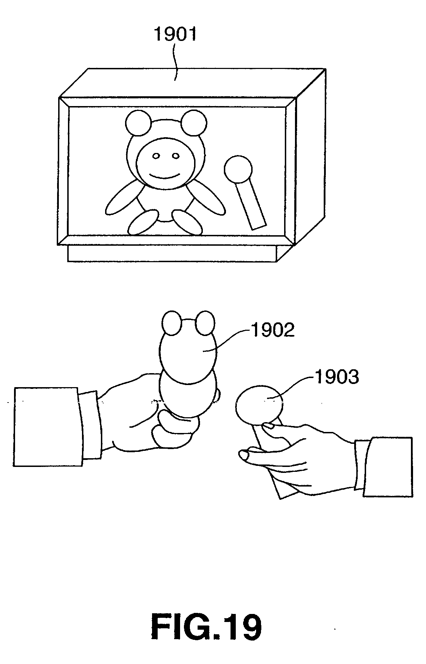

Further, explanation will be given in connection with a different more practical example of application in the three-dimensional model processing apparatus of this invention. FIG. 19 constitutes the three-dimensional model processing apparatus of this invention within, e.g., personal computer to display virtual pet on display 1901 of the personal computer to hold, by one hand, object tool 1902 corresponding to the display virtual pet and to hold, by the other hand, various editing tools 1903 to operate the editing tool 1903 with respect to the object tool 1902 corresponding to pet to thereby execute various processing.

For example, there may be employed a configuration such that a microphone tool is caused to be close to object tool 1902 corresponding to pet with the editing tool 1903 being as microphone tool so that displayed pet outputs voice through speaker. This is realized by executing subprogram set in correspondence with the microphone tool in the case where the microphone tool and the object tool 1902 are caused to be close so that distance therebetween is below a predetermined value to execute processing to output voice. Further, setting may be made so as to execute processing to change tone of voice on the basis of orientation information of the object tool at this time.

In addition, various tools such as kennel, feed, etc. are set as the editing tool to set subprograms to carry out execution in correspondence with respective tools so that various processing can be executed in accordance with kind of tools.

As, e.g., processing programs shown in FIGS. 8, 9, 11, 13, 15, etc. in the three-dimensional model processing apparatus of this invention, program stored in the program memory 102 shown in FIG. 2 may be applied, or there may be employed configuration in which program is stored in various memory media such as CD-ROM, CD-R, CD-RW, DVD-RAM, DVD-RW, DVD+RW, MO, hard disk or floppy disk, etc. For example, in the case of the previously goods selling by goods provider, etc., there may be employed a configuration such that processing program is stored in combination on CD where three-dimensional data of goods as goods catalog is stored to offer it to user. In this case, in the case where the user sets CD to display goods on display to execute processing using various editing tools, processing program corresponding to tool is called and is executed. As a result, processing is carried out in accordance with the tool. Thus, configuration for allowing goods displayed on display to execute various operations is realized.

As stated above, in accordance with the three-dimensional model processing apparatus and the three-dimensional model processing method of this invention, there is employed the configuration in which operator operates various editing tools to execute processing set in accordance with corresponding tool. Accordingly, the operator can execute various processing with a feeling as if he hands or holds the object to be edited displayed on display to directly operate it.

While explanation has been given in connection with this invention with reference to specified embodiments, it is obvious that the person who is skilled in the art can attain modification and/or substitution of the embodiments within the scope which does not depart from the gist. Namely, this invention has been disclosed in the form of exemplification, and should not be restrictively interpreted. In addition, embodiments constituted by combining the above-described embodiments as occasion demands are also included within the scope of this invention. For judging the gist of this invention, the column of the appended patent claims should be taken into consideration.

### Industrial Applicability

As described above, in accordance with the three-dimensional model processing apparatus and the three-dimensional model processing method according to this invention, there is employed the configuration that an operator operates various editing tools to execute processing set in accordance with the corresponding tool. Accordingly, the operator can execute various processing with a feeling as if he or she directly operates the object to be edited displayed on the display.

## Claims

1. A three-dimensional model processing apparatus comprising:
display means for three-dimensionally displaying object to be edited;
an object tool in which movement and orientation change can be made;
an editing tool in which relative distance with respect to the object tool can be changed; and
processing means for detecting relative position between the object tool and the editing tool to execute processing set in correspondence with the editing tool on the basis of the detected relative position information to change attribute information of the object to be edited displayed on the display means.

2. The three-dimensional model processing apparatus as set forth in claim 1 wherein the processing means has a configuration to detect position information of the changed object tool based on movement and orientation change of the object tool to change attribute information of the object to be edited displayed on the display means on the basis of the position information.

3. The three-dimensional model processing apparatus as set forth in claim 1 wherein the processing means has a configuration capable of executing plural different processing corresponding to kind of editing tools.

4. The three-dimensional model processing apparatus as set forth in claim lwherein the processing means has a configuration to execute processing set in correspondence with the editing tool on the basis of relative position information including at least one of relative distance between the object tool and the editing tool and relative angle between the object tool and the editing tool.

5. The three-dimensional model processing apparatus as set forth in claim 1 wherein attribute information of the object to be edited that the processing means changes is either one of attribute information relating to shape, color and sound of the object to be edited displayed on the display means.

6. The three-dimensional model processing apparatus as set forth in claim lwherein the processing means has a configuration to execute functional operation of the object to be edited displayed on the display means as processing set in correspondence with the editing tool.

7. A three-dimensional model processing method for executing various processing with respect to object to be edited three-dimensionally displayed on display means, the three-dimensional model processing method comprising:
a step of detecting relative position between an object tool in which movement and orientation change can be made and an editing tool in which relative distance with respect to the object tool can be changed; and
a step of executing processing set in correspondence with the editing tool on the basis of the detected relative position information to change attribute information of the object to be edited displayed on the display means.

8. The three-dimensional model processing method as set forth in claim 7, which further includes a step of detecting position information of the changed object tool based on movement and orientation change of the object tool, and a step of changing attribute information of the object to be edited displayed on the display means on the basis of the detected position information.

9. The three-dimensional model processing method as set forth in claim 7, which includes a step of discriminating kind of editing tools to execute processing corresponding to the kind of the discriminated editing tool.

10. The three-dimensional model processing method as set forth in claim 7, wherein, at the step of detecting the relative position, relative position including at least either one of relative distance between the object tool and the editing tool and relative angle between the object tool and the editing tool.

11. The three-dimensional model processing method as set forth in claim 7, wherein the attribute information is either one of attribute information relating to shape, color and sound of the object to be edited displayed on the display means.

12. The three-dimensional model processing method as set forth in claim 7, wherein functional operation ofthe object to be edited displayed on the display means is further executed as processing set in correspondence with the editing tool.

13. A program providing medium for providing computer program which executes, on computer system, three-dimensional model processing for executing various processing with respect to object to be edited three-dimensionally displayed on display means, the computer program comprising:
a step of detecting relative position between an object tool in which movement and orientation change can be made and an editing tool in which relative distance with respect to the object tool can be changed; and
a step of executing processing set in correspondence with the editing tool on the basis of the detected relative position information to change attribute information of the object to be edited displayed on the display means.
